# EUROPEAN PATENT APPLICATION

(11) **EP 1 323 522 A2**
(43) Date of publication of application: **02.07.2003**
(21) Application number: 02027652.3
(22) Date of filing: 12.12.2002
(51) Int. Cl.: B32B 5/18, B60R 13/02, C08J 9/00

(54) **Interior material for automobile**

(30) Priority: 25.12.2001 JP 2001391070
(71) Applicant: BAYER AG, 51368 Leverkusen (DE)
(72) Inventor: Itaba, Hiroshi, Neyagawa, Osaka 572-0386 (JP)

(57) **Abstract**

The present invention provides to an automobile interior material having no irritation to skin and easy combustibility for disposal.

An interior material for automobile comprising a urethane foam layer, and a fabric which is attached to at least one main surface of the urethane foam layer.

## Description

The present invention relates to a light-weight, high-rigidity polyurethane/polyurea automobile interior material, particularly a car headliner, having excellent recyclability without glass.

Hitherto, most of reinforcing materials used for a surface material in a sandwich structure are glass mats which are widely used. However, it is strongly desired to replace the glass mat, because the glass has the problem that the glass leaves ash due to incombustibility when the glass mat is treated after usage thereof, for example, when energy is recovered by combustion. A natural fiber mat, a natural fiber, paper and the like are partially used as the replacement material, but these materials are not promising replacement materials substituted for glass since they have low rigidity and large weight.

A technology of a shaped article that an isocyanate is immersed into a flexible urethane foam and/or a rigid urethane foam, then water and a urethane catalyst are added, and both sides are reinforced with glass mats (JP-B-63-7577; Method of preparing a light-weight rigid or semi-rigid composite panel), a technology of sandwiching and thermoforming a open-cell cold-moldable polyurethane foam between two glass mats to which an adhesive is applied (JP-A-04-211416; Method of producing open-cell cold-moldable rigid polyurethane foam and its use for preparing a shaped article) and the like are proposed as the technology of car headliner sandwich structure, and all technologies use the glass fiber as the reinforcing material. The glass fiber has an excellent reinforcement effect, but the glass fiber has the problems that the glass fiber is relatively expensive, that the glass fiber is irritant to a skin of a worker, and that the glass leaves ash due to incombustibility when energy is recovered by combustion during disposal.

A car headliner comprising a woven fabric prepared by weaving the twisted yarns of hemp fiber (for example, a Hessian cloth having a size of 10 according to JIS (Japanese Industrial Standard)) instead of the glass fiber is commercially available. This fabric called as "jute cloth" is a fabric having a basis weight of 150 g/m² to 300 g/m² wherein a yarn of hemp (thickness: 1 mm to 3 mm) is woven in such relatively rough texture that a separation distance between an edge of one yarn and an adjacent edge of a neighbor yarn is from 2 mm to 4 mm. Since this interior material is reluctant to stretch and shrink, a crease is caused at the position of a drawn part. Since it is difficult for the adhesive to penetrate into the twisted yarn, the hardening is insufficient so that unevenness is easily caused on the fabric surface. Additionally, since the net texture is rough and gaps are large, a sufficient reinforcement effect is not exhibited and rigidity is low.

An object of the present invention is to provide an automobile interior material, having no irritation to skin and easy combustibility for disposal. Another object of the present invention is to provide an automobile interior material having easy recyclability, a low density and a light weight, without using a glass fiber as the reinforcing material used for the surface material giving the sandwich structure

The present invention provides an interior material for automobile comprising:
a urethane foam layer, and
a fabric which is attached to at least one main surface of the urethane foam layer.

The automobile interior material of the present invention comprises the urethane foam layer, and the fabric which is attached to at least one main surface of the urethane foam layer. Generally, the automobile interior material of the present invention has the sandwich structure in which one sheet of fabric (totally two sheets) is attached to each of two main surfaces of the urethane foam layers.

The urethane foam layer may be anyone of rigid, semi-rigid and flexible urethane foams. The rigid urethane foam is preferable. The urethane foam layer is preferably thermoformable. The urethane foam layer preferably has open cells. The density of the urethane foam layer is generally from 20 kg/m³ to 100 kg/m³. The thickness of the urethane foam layer is generally from 2 mm to 1 cm.

The fabric is used as a reinforcing material for the automobile interior material. Examples of the fabric include a woven fabric and a knitted fabric. The fabric has such fine texture that a separation distance between the yarns (or between the fibers) is small. Generally, a separation distance between an edge of one yam and an adjacent edge of a neighbor yarn is at most 1 mm, for example, at most 0.5 mm, particularly at most 0.2 mm. The thickness of the yarn is generally from 0.1 mm to 1.0 mm. The thickness of the fabric is generally from 0.1 mm to 1.0 mm.

The material of fabric is except glass and is not limited. The fabric material is a natural fiber (for example, a vegetable fiber such as cotton and hemp, and an animal fiber such as wool), a synthetic fiber (for example, polyester, polyamide and polyacryl) and a mixture thereof. A basis weight (a weight per a unit area) of the fabric is, for example, from 50 g/m² to 300 g/m², particularly from 100 g/m² to 200 g/m². The fabric gives good performance of the reinforcing material.

A material type of the fabric, a fiber gauge, a count of yarns per unit length and the like are not limited. It is possible to use a backing of usually used clothes and a low-cost fabric used as in a futon bag, which have performance equivalent to the fabric made of glass.

The interior material of the present invention can be produced by immersing the adhesive into the fabric and adhering the fabric on the surface of the urethane foam. Examples of the adhesive include a urethane adhesive and an isocyanate adhesive. The amount of the adhesive may be from 20% by weight to 100% by weight, based on the basis weight of the fabric.

The interior material of the present invention effectively exhibits the effect of the sandwich structure so that the reinforcing effect caused by the reinforcing material is given.

### Examples

The present invention is illustrated by showing Examples hereinafter.

A molded sample in the following Examples is evaluated as follows:
(1) Flexural modulus
   A flexural modulus is measured according to JIS K 6301. A sample having a length of 150 mm and a width of 50 mm is cut from the molded sample. The measurement is conducted at a distance between supports of 100mm and a test speed of 50 mm/min.
(2) Moldability
   Moldability is evaluated by the rigidity at demolding, the damage degree of surface skin for decoration and the like.

### Example 1

(1) A polymeric MDI (viscosity: about 100 mpa.s/25°C, NCO content: 31.5%, SBU ISOCYANATE 0357 manufactured by Sumika Bayer Urethane Co., Ltd.) was spray coated onto a fabric (a mixture woven fabric of polyester 65%/cotton 35%, yarn count: 45, basis weight: 110g/m²) in an amount of 40 g/m².
(2) A 1% aqueous solution of bisdimethylaminoethyl ether was spray coated onto both sides of a thermoformable rigid urethane foam sheet having a unit area weight of 165 g/m² and open cells (length 33 cm x width 33 cm x thickness 5.5 mm) in an amount of 20 g/m².
(3) The fabrics produced in the step (1) were placed on both sides of the rigid urethane sheet produced in the step (2), and pressurized in a mold having a test plate mold at 130°C for 30 seconds to give a molded sample having a thickness of 5 mm.

This molded sample had such very light weight that a density (apparent density) was 0.10 g/cm³ and a unit area weight was 500 g/m², but a flexural modulus of the article was 2,200 kg/cm² so that the article had sufficient performance for the car headliner.

### Example 2

(1) A polymeric MDI (viscosity: about 100 mpa.s/25°C, NCO content: 31.5%, SBU ISOCYANATE 0357 manufactured by Sumika Bayer Urethane Co., Ltd.) was spray coated onto a fabric (a mixture woven fabric of polyester 65%/cotton 35%, yam count: 45, basis weight: 110 g/m²) in an amount of 40 g/m².
(2) A 1% aqueous solution of bisdimethylaminoethyl ether was spray coated onto both sides of a thermoformable rigid urethane foam sheet having a unit area weight of 165 g/m² and open cells (length 33 cm x width 33 cm x thickness 5.5 mm) in an amount of 20 g/m².
(3) The fabrics produced in the step (1) were placed on both sides of the rigid urethane sheet produced in the step (2), and pressurized in a mold having a deep drawing mold at 130°C for 30 seconds to give a headliner-shaped sample having a thickness of 3 mm to 5 mm.

This headliner-shaped sample had sufficient rigidity at the time of demolding from the mold, had no unevenness on the surfaces, and had an appearance giving the article which can be sufficiently used as the car headliner.

Since the fabric has the fine network structure, the fabric effectively adheres to the urethane foam core material on whole surface via the adhesive to give excellent reinforcing effects. In addition, a drawn part does not usually have a crease. Even if the crease is caused, the crease does not appear on the surface due to thinness.

## Claims

1. An interior material for automobile comprising:
a urethane foam layer, and
a fabric which is attached to at least one main surface of the urethane foam layer.

2. The interior material for automobile according to claim 1, wherein a basis weight (a weight per a unit area) of the fabric is from 50 g/m² to 300 g/m².

3. The interior material for automobile according to claim 1, wherein the urethane foam layer is a thermoformable urethane foam having open cells and a density of 20 kg/m³ to 100 kg/m³.
